# EUROPÄISCHE PATENTANMELDUNG

(11) **EP 1 288 747 A2**
(43) Veröffentlichungstag der Anmeldung: **05.03.2003**
(21) Anmeldenummer: 02018365.3
(22) Anmeldetag: 14.08.2002
(51) Int. Cl.: G05B 19/02

(54) **System und Verfahren zum Regulieren umweltbezogener Rechte**

(30) Priorität: 24.08.2001 DE 10141492
(71) Anmelder: FutureCamp GmbH, 81549 München (DE)
(72) Erfinder: Geres, Roland, Dr., 81549 München (DE)
(74) Vertreter: Müller, Thomas

(57) **Zusammenfassung**

Es wird unter anderem beschrieben ein System sowie ein Verfahren zum Regulieren umweltbezogener Rechte wenigstens eines Nutzers des Systems (10), wobei dem wenigstens einen Nutzer (20, 30) wenigstens ein umweltbezogenes Recht (21, 31) - beispielsweise ein Emissionsrecht und/oder ein Immissionsrecht - mit zumindest definiertem Ausgangswert zugeordnet ist. Das System (10) weist wenigstens ein Sensorelement (22, 32) zur Erfassung zumindest eines für das umweltbezogene Recht (21, 31) spezifischen Parameters auf, wobei das wenigstens eine Sensorelement (22, 32) über ein Übertragungsnetz (40) zumindest zeitweilig mit wenigstens einer Einrichtung zur Datenverarbeitung (50) verbunden oder verbindbar ist. Um eine einfache, kostengünstige und automatisierte Regulierung der umweltbezogenen Rechte (21, 31) zu ermöglichen, ist erfindungsgemäß vorgesehen, daß wenigstens eine dem umweltbezogenen Recht (21, 31) zugeordnete digitale Kontodatei (52) vorgesehen ist, in welcher über die Einrichtung zur Datenverarbeitung (50) vom Sensorelement (22, 32) erfaßte Parameterwerte (25, 35) und/oder daraus erzeugte Parameterdaten zur Erzeugung von Konto-Istwerten (54) automatisch abgelegt werden oder ablegbar sind. Weiterhin sind Mittel (55) zum automatischen Vergleichen der Konto-Istwerte (54) mit wenigstens einem vorgegebenen, auf den Wert des Rechts (21, 31) bezogenen Sollwert (56) vorgesehen. Schließlich weist das System (10) Mittel (67) zum Regulieren des umweltbezogenen Rechts (21, 31) auf, sobald der Konto-Istwert (54) den vorgegebenen Sollwert (56) erreicht.

## Beschreibung

Die vorliegende Erfindung betrifft zunächst ein System zum Regulieren umweltbezogener Rechte von Nutzern des Systems gemäß dem Oberbegriff von Patentanspruch 1. Weiterhin betrifft die Erfindung ein Verfahren zum Regulieren umweltbezogener Rechte von Nutzern eines Systems zum Regulieren umweltbezogener Rechte gemäß dem Oberbegriff von Patentanspruch 12.

In den letzten Jahren hat das Bewußtsein der Menschen, sorgfältiger mit den Ressourcen der Erde umzugehen, stetig zugenommen. Insbesondere rückt dabei immer mehr in den Vordergrund, Emissionen von Stoffen, die beispielsweise für den sogenannten Treibhauseffekt verantwortlich sind, etwa Kohlendioxid oder dergleichen, zu kontrollieren und zu reduzieren. Hierzu sind bereits verschiedene Lösungsansätze bekannt geworden.

Beispielsweise ist in der EP-A-0 622 625 ein System zur Analyse der Luftqualität beschrieben. Dieses System umfaßt ein Netzwerk mit einer zentralen Rechnereinheit sowie einer Anzahl von unterschiedlichen Sensorelementen. Die Sensorelemente erfassen Luftdaten und übertragen diese zur zentralen Rechnereinheit. In der zentralen Rechnereinheit werden die eingehenden Daten anschließend ausgewertet. Dies erfolgt derart, daß eine Analyse erstellt wird, die den aktuellen Ist-Zustand der vorherrschenden Luftqualität widerspiegelt. Mittels der so erstellten Analyse können Veränderungen der Luftqualität dokumentiert und daraus Vorhersagen für mögliche künftige Veränderungen abgeleitet werden.

Darüber hinaus sind in jüngster Vergangenheit Bestrebungen in Gang gesetzt worden, umweltbezogene Rechte, beispielsweise wie oben beschriebene Emissionsrechte, die einen definierten Wert haben, bestimmten Personen zuzuordnen. In bezug auf das Emittieren von Kohlendioxid bedeutet dies beispielsweise, daß eine Person ein bestimmtes Recht erhält, eine bestimmte Menge an Kohlendioxid über einen bestimmten Zeitraum zu emittieren. Diesbezüglich besteht das Bedürfnis, solche Rechte auch zu regulieren, das heißt an tatsächliche Gegebenheiten anpassen zu können.

Ausgehend hiervon liegt der vorliegenden Erfindung die Aufgabe zu Grunde, ein System sowie ein Verfahren der eingangs genannten Art derart weiterzubilden, daß damit auf einfache und kostengünstige Weise eine Regulierung umweltbezogener Rechte durchgeführt werden kann.

Diese Aufgabe wird erfindungsgemäß gelöst durch die Merkmale des Systems gemäß dem unabhängigen Patentanspruch 1 sowie durch die Merkmale des Verfahrens gemäß dem unabhängigen Patentanspruch 12. Weiterhin wird ein entsprechendes Computerprogrammprodukt bereitgestellt. Weitere Vorteile, Merkmale, Details, Aspekte und Effekte der Erfindung ergeben sich aus den Unteransprüchen, der Beschreibung sowie den Zeichnungen. Merkmale und Details die im Zusammenhang mit dem erfindungsgemäßen System beschrieben sind, gelten dabei selbstverständlich auch im Zusammenhang mit dem erfindungsgemäßen Verfahren, und jeweils umgekehrt. Analoges gilt für das erfindungsgemäße Computerprogrammprodukt.

Gemäß dem ersten Aspekt der Erfindung wird ein System zum Regulieren umweltbezogener Rechte wenigstens eines Nutzers des Systems, insbesondere zum Regulieren umweltbezogener Rechte in Form von Emissionsrechten und/oder Immissionsrechten, bereitgestellt, wobei dem wenigstens einen Nutzer wenigstens ein umweltbezogenes Recht mit zumindest definiertem Ausgangswert zugeordnet ist, mit wenigstens einem Sensorelement zur Erfassung zumindest eines für das umweltbezogene Recht spezifischen Parameters, wobei das wenigstens eine Sensorelement über ein Übertragungsnetz zumindest zeitweilig mit wenigstens einer Einrichtung zur Datenverarbeitung verbunden oder verbindbar ist. Das System ist erfindungsgemäß dadurch gekennzeichnet, daß wenigstens eine dem umweltbezogenen Recht zugeordnete digitale Kontokartei vorgesehen ist, in welcher über die Einrichtung zur Datenverarbeitung vom Sensorelement erfaßte Parameterwerte und/oder daraus erzeugte Parameterdaten zur Erzeugung von Konto-Istwerten automatisch abgelegt werden oder ablegbar sind, daß Mittel zum automatischen Vergleichen der Konto-Istwerte mit wenigstens einem vorgegebenen, auf den Wert des Rechts bezogenen Sollwert vorgesehen sind, und daß Mittel zum Regulieren des umweltbezogenen Rechts vorgesehen sind, sobald der Konto-Istwert den vorgegebenen Sollwert erreicht.

Durch das erfindungsgemäße System wird eine einfache Regulierung von umweltbezogenen Rechten wenigstens eines Nutzers des Systems möglich. Durch das System erfolgt die Regulierung zumindest weitestgehend automatisch, wobei dies vorzugsweise in oder mit Hilfe der wenigstens einen Einrichtung zur Datenverarbeitung geschieht. Auf diese Weise wird eine Lösung geschaffen, bei der der Mensch im Rahmen der eigentlichen Regulierung der umweltbezogenen Rechte nicht mehr eingreifen muß beziehungsweise kann. Durch das erfindungsgemäße System wird insbesondere eine schnelle, objektive und dabei kostengünstige Regulierung umweltbezogener Rechte ermöglicht.

Gemäß einem Grundgedanken der Erfindung besteht das erfindungsgemäße System im Wesentlichen aus folgenden Elementen: zunächst wird einem Nutzer wenigstens ein umweltbezogenes Recht zugeordnet, welches zumindest einen definierten Ausgangswert hat. Anschließend werden für das umweltbezogene Recht bestimmte Sollwerte festgelegt. Weiterhin werden Parameter bezüglich des umweltbezogenen Rechts erfaßt, die den tatsächlichen, aktuellen Wert des umweltbezogenen Rechts widerspiegeln. Diese Istwerfe werde mit den festgelegten Sollwerten verglichen. Sofern die Istwerfe die Sollwerte erreichen, wird vom System die Regulierung des umweltbezogenen Rechts eingeleitet beziehungsweise durchgeführt.

Die Erfindung ist nicht auf eine bestimmte Anzahl von Nutzern beschränkt. Grundsätzlich ist es ausreichend, wenn wenigstens ein Nutzer des Systems vorhanden ist. Vorzugsweise können jedoch zwei oder mehr Nutzer des Systems vorhanden sein. Besonders vorteilhaft ist es, wenn das System von einer möglichst großen Anzahl von Nutzern genutzt wird.

Ebenso ist die Erfindung nicht auf bestimmte Nutzertypen beschränkt. So kann es sich bei den Nutzers beispielsweise um natürliche und/oder juristische Personen handeln, etwa um Einzelpersonen, Organisationen, Unternehmen und Gesellschaften aller Art, um Unternehmensbranchen, um Behörden, um Staaten und dergleichen. Hierbei ist jede mögliche Kombination verschiedener Nutzertypen denkbar.

Jedem Nutzer des Systems ist dabei wenigstens ein umweltbezogenes Recht zugeordnet. Es kann jedoch auch vorgesehen sein, daß jeder, zumindest aber einzelne Nutzer über zwei oder mehr umweltbezogene Rechte verfügen.

Pro umweltbezogenem Recht wird über wenigstens ein geeignetes Sensorelement wenigstens ein für das umweltbezogene Recht spezifischer Parameter erfaßt. Dabei ist die Erfindung nicht auf bestimmte Formen von Sensorelementen beschränkt. Vielmehr ergibt sich die jeweilige Ausgestaltung der Sensorelemente je nach Art der zu erfassenden Parameter. Vorteilhaft kann vorgesehen sein, daß pro umweltbezogenem Recht mehr als ein Parameter erfaßt wird. Je mehr Parameter, insbesondere auch unterschiedliche Parameter, pro umweltbezogenem Recht erfaßt werden, desto genauer kann die spätere Regulierung des umweltbezogenen Rechts erfolgen.

Pro zu erfassendem Parameter ist wenigstens ein Sensorelement vorgesehen. Es ist jedoch auch möglich, daß pro zu erfassendem Parameter mehr als ein Sensorelement vorgesehen ist. Ein Beispiel hierfür wird im weiteren Verlauf der Beschreibung näher erläutert.

Das wenigstens eine Sensorelement überträgt den von ihm erfaßten Parameter mittels eines Übertragungsnetzes an die Einrichtung zur Datenverarbeitung, wo der Parameter weiter verarbeitet wird. Dabei kann das Übertragungsnetz beliebig ausgebildet sein. Wichtig ist lediglich, daß mit dessen Hilfe die vom Sensorelement erfaßten Werte an die Einrichtung zur Datenverarbeitung übertragen werden können. Einige nicht ausschließliche Beispiele für geeignete Übertragungsnetze werden im weiteren Verlauf der Beschreibung näher erläutert. Ebenso ist die Erfindung nicht auf bestimmte Ausgestaltungsformen der Einrichtung zur Datenverarbeitung beschränkt.

Vorteilhaft ist zu jedem umweltbezogenen Recht wenigstens eine digitale Kontodatei vorgesehen. Bei der digitalen Kontodatei handelt es sich allgemein um eine Datei, in der vom Sensorelement erfaßte Werte bezüglich des Parameters elektronisch abgelegt werden. Bei der digitalen Kontodatei handelt es sich mithin um ein in bezug auf das umweltbezogene Recht ausgestaltetes digitales Konto.

Dabei kann die digitale Kontodatei entweder der Einrichtung zur Datenverarbeitung zugeordnet oder aber separat zu dieser geführt werden. Im letztgenannten Fall kann die digitale Kontodatei beispielsweise an einem zur Einrichtung zur Datenverarbeitung separaten Ort geführt werden. Wie dies im einzelnen geschehen kann, wird im weiteren Verlauf der Beschreibung noch näher erläutert.

In der digitalen Kontodatei können entweder die vom Sensorelement direkt erfaßten Parameterwerte, oder aber daraus erzeugte Parameterdaten abgelegt werden. Natürlich sind auch Kombinationen von entsprechenden Werten und Daten möglich. Wenn in der digitalen Kontodatei Parameterdaten abgelegt werden, erfolgt die Umwandlung der erfaßten Parameterwerte in solche Parameterdaten vorzugsweise in der Einrichtung zur Datenverarbeitung. Selbstverständlich ist es auch möglich, daß die Umwandlung von Werten in Daten bereits im jeweiligen Sensorelement vorgenommen wird. Auf diese Weise wird es beispielsweise möglich, die vom Sensorelement erfaßten Werte direkt als Meßdaten und/oder auf der Basis von spezifischen Benchmarks zu verarbeiten. Vorteilhaft kann pro Parameter ein digitales Konto vorgesehen sein. Es ist jedoch auch denkbar, daß pro Parameter mehr als ein digitales Konto vorgesehen ist. Analoges gilt im Zusammenhang mit dem Sensorelement. Auch hier kann pro Sensorelement wenigstens ein digitales Konto vorgesehen sein.

Aus den erfaßten Parameterwerten und/oder den daraus erzeugten Parameterdaten werden Konto-Istwerte erzeugt, die automatisch in der wenigstens einen digitalen Kontodatei abgelegt werden oder ablegbar sind.

Weiterhin sind erfindungsgemäß Mittel zum automatischen Vergleichen der Konto-Istwerte mit wenigstens einem vorgegebenen, auf den Wert des Rechts bezogenen Sollwert vorgesehen. Diese Mittel sind vorzugsweise Bestandteil der Einrichtung zur Datenverarbeitung. Über diese Vergleichsmittel wird eine Ist-Soll-Analyse durchgeführt. Vorzugsweise können die Mittel zum automatischen Vergleichen der Konto-Istwerte mit wenigstens einem vorgegebenen, auf den physikalischen und/oder qualitativen und/oder quantitativen und/oder monetären Wert des Rechts bezogenen Sollwert vorgesehen sein.

Dabei können die Sollwerte unterschiedliche Werte aufweisen. Beispielsweise ist es denkbar, daß der Sollwert dem eigentlichen Wert des umweltbezogenen Rechts entspricht. Ebenso ist es denkbar, daß der Sollwert einen bestimmten Grenzwert bildet, der unterhalb des eigentlichen Werts des umweltbezogenen Rechts angesiedelt ist. Vorteilhaft ist der Sollwert in Form eines solchen Grenzwerts ausgebildet, da auf diese Weise ein genügend großer Spielraum bestehen bleibt, wenn der tatsächliche Konto-Istwert den Sollwert erreicht.

Schließlich sind erfindungsgemäß Mittel zum Regulieren des umweltbezogenen Rechts vorgesehen, sobald der Konto-Istwert den vorgegebenen Sollwert erreicht. Auch diese Mittel sind vorzugsweise Bestandteil der Einrichtung zur Datenverarbeitung. Vorteilhaft wird die Regulierung des umweltbezogenen Rechts automatisch eingeleitet und durchgeführt, sobald der Konto-Istwert den Sollwert erreicht. Dazu können die Mittel automatisch zumindest eine Aktion einleiten, auf Grund derer eine Anpassung des Werts des umweltbezogenen Rechts an die aktuell vorherrschende Situation erfolgt.

Mit Hilfe des erfindungsgemäßen Systems ist nicht nur eine einfache Regulierung umweltbezogener Rechte möglich, sondern es besteht auch die Möglichkeit eines klaren Monitorings (Überwachung) der Nutzer sowie der diesen zugeordneten umweltbezogenen Rechte.

Die vorliegende Erfindung ist nicht auf bestimmte Arten umweltbezogener Rechte beschränkt. So ist das erfindungsgemäße System beispielsweise im Zusammenhang mit der Bewirtschaftung jeder Art von Umweltgütern einsetzbar. Hier ist das erfindungsgemäße System etwa im Zusammenhang mit der Regulierung von Emissionsrechten, Immissionsrechten, Wasserrechten, Rechten im Zusammenhang mit der Erfassung und Bewertung von Abwasserdaten und dergleichen einsetzbar. Natürlich sind auch noch andere Einsatzgebiete möglich.

Vorteilhaft wird das System jedoch zum Regulieren umweltbezogener Rechte in Form von Emissionsrechten und/oder Immissionsrechten eingesetzt.

Dabei wird als Emissionsrecht grundsätzlich die verbriefte Befugnis verstanden, eine bestimmte Menge eines Stoffes innerhalb eines bestimmten Zeitraums zu emittieren. Emissionen sind beispielsweise von einer Anlage oder einer Emissionsquelle ausgehende Luftverunreinigungen, Geräusche, Erschütterungen, Licht, Wärme, Strahlen und ähnliche Erscheinungen. Bei Luftverunreinigungen handelt es sich beispielsweise um Veränderungen der natürlichen Zusammensetzung der Luft, insbesondere durch Rauch, Ruß, Staub, Gase, Aerosole, Dämpfe, Geruchsstoffe, und dergleichen. Als Anlagen, von denen Emissionen ausgehen können, sind beispielsweise Betriebsstätten und sonstige ortsfeste Einrichtungen, Maschinen, Geräte und sonstige ortsveränderliche technische Einrichtungen, Fahrzeuge, Grundstücke, auf denen Stoffe gelagert oder abgelagert oder Arbeiten durchgeführt werden, die Emissionen verursachen können, und dergleichen zu nennen.

Bei den emittierten Stoffen kann es sich beispielsweise um Schadstoffe, Gase, Gasäquivalente oder dergleichen handeln. Emissionsrechte spielen beispielsweise im Zusammenhang mit Treibhausgasen, und hier insbesondere im Zusammenhang mit CO₂ und CH₄ eine besondere Rolle. Emissionsrechte können aber auch im Zusammenhang mit anderen Stoffen, wie beispielsweise SO₂, N₂O, HFC-Verbindungen, PFC-Verbindungen, SF₆ und dergleichen von Interesse sein.

Als Immissionsrecht wird beispielsweise die verbriefte Befugnis verstanden, eine bestimmte Menge an Stoffen zu immittieren, etwa eine bestimmte Volumeneinheit Luft mit einer bestimmten Menge eines Stoffes, beispielsweise eines verunreinigenden Spurenstoffes, zu belasten. Immissionen sind beispielsweise auf Menschen, Tiere, Pflanzen, den Boden, das Wasser, die Atmosphäre, Kulturgüter, Sachgüter und dergleichen einwirkende Luftverunreinigungen, Geräusche, Erschütterungen, Licht, Wärme, Strahlen oder ähnliche Erscheinungen.

Vorteilhaft kann wenigstens eine Speichereinrichtung zum zumindest zeitweiligen Abspeichern der wenigstens einen digitalen Kontodatei und/oder zum Abspeichern des wenigstens einen Sollwerts und/oder zum Abspeichern des Werts des wenigstens einen umweltbezogenen Rechts und/oder zum Abspeichern von Informationen über den wenigstens einen Nutzer vorgesehen sein. Dabei kann die Speichereinrichtung zur flüchtigen, das heißt temporären, oder zur permanenten Speicherung ausgebildet sein. Vorteilhaft können die verschiedenen Werte, Informationen und Daten in einer einzigen Speichereinrichtung abgelegt sein oder werden. Selbstverständlich ist es auch denkbar, daß für jeden der Werte, Informationen und Daten eine eigene, separate Speichereinrichtung vorgesehen ist. Der letztgenannte Fall ist insbesondere dann von Vorteil, wenn die Speichereinrichtungen austauschbar sein oder aber dezentral geführt werden sollen. Die in der wenigstens einen Speichereinrichtung abgespeicherten Daten, Werte und Informationen liegen vorteilhaft in Form von Datensätzen vor. Die Datensätze können einander zugeordnet, miteinander verknüpft oder unabhängig voneinander sein. Dabei ist jede Form, jede Art und jede beliebige Ansammlung von Datensätzen in der Speichereinrichtung möglich.

Die Erfindung ist nicht auf bestimmte Arten von Speichereinrichtungen beschränkt. Beispielsweise kann es sich bei der Speichereinrichtung im Vergleich zur Einrichtung zur Datenverarbeitung um eine externe Speichereinrichtung handeln. In diesem Fall kann die Speichereinrichtung beispielsweise als (Magnet-)Band, als Diskette, als CD-ROM, als dezentrale Datenbank oder dergleichen ausgebildet sein. Ebenso ist es denkbar, daß die Speichereinrichtung Bestandteil der Einrichtung zur Datenverarbeitung ist. In diesem Fall kann es sich bei der Speichereinrichtung beispielsweise auch um eine Festplatte oder dergleichen handeln.

Durch die zumindest zeitweilige Speicherung von Daten, beziehungsweise Dateien, Werten, Informationen und dergleichen, lassen sich insbesondere auch historische Entwicklungen einzelner Daten und dergleichen besonders einfach nachweisen. Solche Nachweise können beispielsweise dann erforderlich sein, wenn bestimmte Entwicklungen aufgezeigt, eventuelle Fehler aufgedeckt oder sonstige Aussagen zu historischen Entwicklungen gemacht werden sollen. Für historische Informationen kann es beispielsweise vorteilhaft sein, wenn die einzelnen, abgespeicherten Daten über die Einrichtung zur Datenverarbeitung zusätzlich mit einem digitalen Zeitstempel (time stamp) versehen werden.

Bei den für den wenigstens einen Nutzer spezifischen Informationen kann es sich beispielsweise um Informationen zur Identifikation des Nutzers handeln. Hierbei kann es sich etwa um einen Benutzernamen, ein Kennwort und dergleichen handeln. Zusätzlich oder alternativ ist es möglich, daß für den Nutzer bedeutsame Informationen abgespeichert werden beziehungsweise sind. Hierbei kann es sich beispielsweise, jedoch nicht ausschließlich, um Informationen zur Adresse des Nutzers, um persönliche Daten des Nutzers, um Informationen zu Zahlungsmitteln, wie beispielsweise Bankkontonummern, Nummern von Kreditkarten und dergleichen handeln. Natürlich sind auch andere Arten von Informationen denkbar.

Vorteilhaft kann die wenigstens eine Speichereinrichtung der Einrichtung zur Datenverarbeitung zugeordnet sein. Die Speichereinrichtung fungiert somit als zentraler Server, beziehungsweise als zentrale Datenbank der Einrichtung zur Datenverarbeitung. In weiterer Ausgestaltung ist es möglich, daß die wenigstens ein. Speichereinrichtung als zur Einrichtung zur Datenverarbeitung unabhängiges Element ausgebildet ist und daß die Einrichtung zur Datenverarbeitung über Verbindungsmittel zumindest zeitweilig mit der Speichereinrichtung kommuniziert. In diesem Fall handelt es sich bei der Speichereinrichtung beispielsweise um eine unabhängige Rechnereinheit, beziehungsweise eine unabhängige Datenbank, die beispielsweise von einem unabhängigen Dienstleister betrieben werden könnte. In diesem Fall ist es beispielsweise möglich, daß die wenigstens eine Speichereinrichtung einer unabhängigen Kontrollinstanz zugeordnet ist, so daß Manipulationen der Speichereinrichtung(en) wirksam verhindert werden können. Im Betrieb des Systems greift dann die Einrichtung zur Datenverarbeitung auf die Speichereinrichtung(en) zu. Hierzu ist die Einrichtung zur Datenverarbeitung zumindest zeitweilig mit der/den Speichereinrichtung(en) verbunden. Diese Verbindung kann beispielsweise über ein geeignetes Übertragungsnetz realisiert werden. Hierbei kann es sich beispielsweise um das gleiche Übertragungsnetz handeln, das auch für die Übertragung der von den Sensorelementen erfaßten Parametern auf die Einrichtung zur Datenverarbeitung genutzt wird.

In weiterer Ausgestaltung können in der Einrichtung zur Datenverarbeitung Mittel zum automatischen Aufsummieren der erfaßten Parameterwerte und/oder daraus erzeugter Parameterdaten und zum Erzeugen eines Konto-Istwerts aus den aufsummierten Parameterwerten und/oder Parameterdaten vorgesehen sein.

Diese Summationsmittel bewirken, daß die jeweils erfaßten Parameterwerte, beziehungsweise die daraus erzeugten Parameterdaten, über die Einrichtung zur Datenverarbeitung lediglich in die digitale Kontodatei geschrieben werden müssen. In der digitalen Kontodatei werden die jeweils aktuellen Werte, beziehungsweise Daten, von den Summationsmitteln automatisch den jeweils letzten (bis dahin aktuellen) Konto-Istwerten hinzu addiert, so daß sich anschließend ein neuer, nunmehr aktueller Konto-Istwert ergibt.

Vorteilhaft können die Mittel zum Regulieren des umweltbezogenen Rechts zur automatischen Übertragung von Rechten des Nutzers auf eine andere Zeitperiode ausgebildet sein. Hierbei kann es sich vorteilhaft um eine Art "Banking" der umweltbezogenen Rechte handeln.

Wenn ein dem umweltbezogenen Recht zugeordneter Konto-Istwert den dazu korrespondierenden Sollwert erreicht, wird vom System automatisch die Regulierung des umweltbezogenen Rechts eingeleitet beziehungsweise durchgeführt. Beispielsweise kann vorgesehen sein, daß die Konto-Istwerte pro Zeiteinheit einen bestimmten Wert nicht überschreiten dürfen. Im Zusammenhang mit der Regulierung von Emissionsrechten könnte dies beispielsweise bedeuten, daß der Nutzer pro bestimmter Zeiteinheit nur eine bestimmte Menge an Stoffen emittieren darf. Wenn nun die vorgegebene Menge (der Sollwert) vor Ablauf der Zeitperiode erreicht ist, würde dies bedeuten, daß der Nutzer das Emittieren von Stoffen einstellen muß. Durch die besondere Ausgestaltung der Mittel zum Regulieren des umweltbezogenen Rechts ist es nunmehr möglich, daß die nach Erreichen des Sollwerts emittierten Stoffe einem anderen digitalen Konto des Nutzers, das beispielsweise eine spätere Zeitperiode repräsentiert, zugeordnet werden. Der Nutzer hat damit die Möglichkeit, bei der Emission der Stoffe eine Anleihe in die Zukunft zu nehmen. Ebenso ist es denkbar, daß in solchen Fällen, in denen nach Ablauf einer bestimmten Zeitperiode noch ein "Guthaben" für das Emittieren von Stoffen vorhanden ist, dieses "Guthaben" auf eine andere Zeitperiode übertragen wird. Wenn beispielsweise nach Ablauf der bestimmten Zeitperiode die Kontolstwerte des digitalen Kontos den vorgegebenen Sollwert noch nicht erreicht haben, kann die bestehende Differenz von den Mitteln zum Regulieren des umweltbezogenen Rechts automatisch erfaßt und auf eine andere Zeitperiode, beziehungsweise auf eine diese spätere Zeitperiode repräsentierende digitale Kontodatei, übertragen werden.

Wenn zwei oder mehr Nutzer des Systems vorgesehen sind, können die Mittel zum Regulieren des umweltbezogenen Rechts vorteilhaft zur automatischen Übertragung von Rechten von einem Nutzer auf wenigstens einen anderen Nutzer ausgebildet sein. In diesem Fall fungieren die Mittel zum Regulieren des umweltbezogenen Rechts als Übertragungsmittel von Rechten eines Nutzers auf einen anderen Nutzer. Die Mittel ermöglichen somit einen Handel (Trading) mit umweltbezogenen Rechten.

Im Zusammenhang mit der Regulierung von Emissionsrechten bedeutet dies beispielsweise, daß über die Regulationsmittel die Emissionserlaubnis von einem Nutzer auf einen anderen Nutzer, beispielsweise einen anderen Marktteilnehmer, übertragen werden kann. Die Transferierbarkeit von Emissionsrechten, beziehungsweise von umweltbezogenen Rechten, macht diese somit zu handelbaren Rechten. Beispiele dafür, wie dies im einzelnen geschehen kann, werden im weiteren Verlauf der Beschreibung noch näher erläutert.

Vorteilhaft können Mittel zum automatischen Generieren einer Benachrichtigung des Nutzers vorgesehen sein, mindestens sobald der Konto-Istwert den vorgegebenen Wert erreicht. Das bedeutet, daß der entsprechende Nutzer rechtzeitig informiert wird, wenn die Regulierung des umweltbezogenen Rechts eingeleitet wird beziehungsweise eingeleitet werden muß. Die Mittel zum automatischen Generieren der Benachrichtigung sind vorzugsweise Bestandteil der Einrichtung zur Datenverarbeitung.

Natürlich ist es auch denkbar, daß die Mittel auch zu anderen Zeitpunkten Benachrichtigungen an den Nutzer generieren, so daß dieser beispielsweise laufend über den "Saldo" seines digitalen Kontos informiert wird. In diesem Fall kann es sich bei der generierten Benachrichtigung beispielsweise um eine Art Kontoauszug handeln.

Vorzugsweise können die Mittel zum automatischen Generieren der Benachrichtigung weiterhin auch zum automatischen Übertragen der Benachrichtigung an den Nutzer ausgebildet sein. Dadurch bekommt der Nutzer automatisch eine entsprechende Benachrichtigung. Diese Benachrichtigung kann beispielsweise als Email, als automatisch beziehungsweise maschinell erstellter Brief oder dergleichen verschickt werden.

In weiterer Ausgestaltung kann die Einrichtung zur Datenverarbeitung Mittel zur Verarbeitung einer vom Nutzer an die Einrichtung gerichteten Eingangsinformation aufweisen. Diese Mittel sind wiederum vorteilhaft Bestandteil der Einrichtung zur Datenverarbeitung, wobei die vom Nutzer erzeugten Eingangsinformationen vorzugsweise automatisch verarbeitet werden. Der Nutzer, beziehungsweise der Erzeuger, der Eingangsinformationen kann beispielsweise über eine geeignete Einrichtung zur Datenverarbeitung mit derjenigen Einrichtung zur Datenverarbeitung kommunizieren, in der die Eingangsinformationen erfaßt und elektronisch verarbeitet werden. Die Eingangsinformationen, bei denen es sich beispielsweise um Bestätigungsinformationen und/oder Anweisungsinformationen in bezug auf zuvor verschickte Benachrichtigungen handelt, kann von der Einrichtung zur Datenverarbeitung verarbeitet und, je nach Bedarf, in einer Speichereinrichtung abgespeichert werden. Ebenso ist es denkbar, daß die vom Nutzer an die Einrichtung zur Datenverarbeitung übertragenen Eingangsinformationen an weitere Nutzer des Systems, vorzugsweise in elektronischer Form, weitergeleitet werden. Dies ist insbesondere dann von Vorteil, wenn mittels des Systems umweltbezogene Rechte von einem Nutzer auf einen anderen Nutzer übertragen werden sollen. Auch ist es denkbar, die Eingangsinformationen an ein elektronisches Archivierungssystem oder dergleichen weiterzuleiten. Auf ähnliche Weise können selbstverständlich auch die weiter oben beschriebenen, automatisch generierten Benachrichtigungen an den Nutzer in einem entsprechenden elektronischen Archivierungssystem abgelegt werden.

Vorteilhaft können die Mittel zum Regulieren des umweltbezogenen Rechts eine Steuereinrichtung zur automatischen Steuerung der mit der Übertragung der Rechte zwischen Nutzern verbundenen Informationsflüsse und/oder Zahlungsflüsse aufweisen.

In weiterer Ausgestaltung kann im System wenigstens ein digitales Verzeichnis mit Übertragungsabsichten wenigstens eines Nutzers vorgesehen sein. Das digitale Verzeichnis kann dabei insbesondere in einer Speichereinrichtung, insbesondere in einer wie weiter oben bereits näher spezifizierten Speichereinrichtung, abgespeichert sein. Die Übertragungsabsichten liegen vorteilhaft in Form von Datensätzen vor, die im digitalen Verzeichnis abgelegt, beziehungsweise in einer entsprechenden Speichereinheit abgespeichert sind. Die Datensätze können einander zugeordnet, miteinander verknüpft oder unabhängig voneinander sein. Dabei ist jede Form, jede Art und jede beliebige Ansammlung von Datensätzen im digitalen Verzeichnis möglich.

Wenn ein Nutzer des System beispielsweise bei Ablauf eines bestimmten Zeitintervalls den Wert des ihm zugeordneten umweltbezogenen Rechts noch nicht vollständig erreicht hat, kann er beispielsweise eine entsprechende Eingangsinformation an die Einrichtung zur Datenverarbeitung richten, daß er die ihm zustehenden, nicht verbrauchten Restwerte des umweltbezogenen Rechts an einen anderen Nutzer des Systems übertragen möchte. Ebenso kann ein Nutzer, der vor Ablauf der Zeitperiode den festgelegten Wert des umweltbezogenen Rechts erreicht und somit das ihm zustehende Recht bei Ablauf der Zeitperiode überschreiten würde, eine entsprechende Eingangsinformation an die Einrichtung zur Datenverarbeitung richten, daß er an der Übertragung von Rechten von anderen Nutzern auf sich selbst interessiert ist. Die entsprechenden Informationen werden in dem wenigstens einen digitalen Verzeichnis gesammelt und gespeichert.

Wenn nun vom System automatisch eine Benachrichtigung eines Nutzers generiert wird, sobald dessen Konto-Istwerte den vorgegebenen Sollwert erreichen, kann vom System, insbesondere von der Einrichtung zur Datenverarbeitung, an eine solche Benachrichtigung automatisch noch eine Information über mögliche Übertragungsinteressenten angehängt werden.

In einer vom Nutzer an die Einrichtung zur Datenverarbeitung gerichteten Eingangsinformation kann dann auch der Wunsch des Nutzers enthalten sein, Rechte eines anderen Nutzers auf sich selbst übertragen zu bekommen. Diese Eingangsinformationen werden dann in der Einrichtung zur Datenverarbeitung automatisch verarbeitet, was bedeutet, daß über die weiter oben beschriebene Steuereinrichtung beispielsweise alle im Zusammenhang mit der Übertragung der Rechte zwischen den beiden Nutzern verbundenen Informationsflüsse und/oder Zahlungsflüsse automatisch gesteuert werden.

Vorteilhaft können die Mittel zum Regulieren des umweltbezogenen Rechts eine Einrichtung zum automatischen Anpassen der Sollwerte des wenigstens einen umweltbezogenen Rechts und/oder zum automatischen Anpassen des Werts des wenigstens einen umweltbezogenen Rechts aufweisen.

Wenn beispielsweise Rechte eines Nutzers in der weiter oben beschriebenen Weise auf eine andere Zeitperiode übertragen wurden, oder wenn Rechte von einem Nutzer auf einen anderen Nutzer übertragen wurden, ändern sich natürlich auch die Werte der umweltbezogenen Rechte beziehungsweise deren Sollwerte. Die Änderung dieser Werte muß dabei auch in den entsprechenden Dateien vorgenommen werden. Dies erfolgt über die genannte Einrichtung, die dabei insbesondere als Bestandteil der Einrichtung zur Datenverarbeitung ausgebildet ist.

In weiterer Ausgestaltung können Mittel zur Bereitstellung und/oder Anzeige von die Regulierung des umweltbezogenen Rechts betreffenden Informationen vorgesehen sein. Auf diese Weise können beispielsweise Daten für natürliche und/oder juristische Personen, staatliche Institutionen und Behörden zu Informations- und Kontrollzwecken bereitgestellt werden. Beispielsweise können die von den Mitteln erzeugten Informationen an die weiter oben bereits erläuterten, automatisch generierten Benachrichtigungen eines Nutzers angehängt werden, so daß dieser stets über alle aktuellen Informationen bezüglich seines umweltbezogenen Rechts informiert ist. Auf ähnliche Weise ist auch eine Kontrolle des Nutzers durch bestimmte Kontrollinstanzen möglich. Solche Mittel zur Bereitstellung und/oder Anzeige von Informationen können beispielsweise als Emailserver realisiert sein, der insbesondere automatisch entsprechende Emails verschickt. Es ist jedoch auch denkbar, daß die entsprechenden Mittel in einer Weise ausgebildet sind, daß entsprechende Benachrichtigungen automatisch erstellt und ausgedruckt werden. Natürlich ist es auch denkbar, daß die Informationen auf andere Weise angezeigt beziehungsweise bereitgestellt werden. Zu nennen ist hier beispielsweise der Einsatz entsprechender Internetportale, beziehungsweise Internetseiten, auf die der Nutzer, beziehungsweise zur Einsicht der Informationen berechtigte Personen und Instanzen, Zugriff haben.

Die Übertragung einzelner Parameter, Daten, Werte, Informationen und dergleichen erfolgt über ein geeignetes Übertragungsnetz. Dabei ist die Erfindung jedoch nicht auf bestimmte Übertragungsnetze beschränkt. Vorteilhaft, jedoch nicht ausschließlich, kann das Übertragungsnetz als Informationsübertragungsnetz, insbesondere als Kommunikationsnetz ausgebildet sein. Es ist jedoch auch denkbar, zur Übertragung anderer Netze, wie beispielsweise Stromleitungsnetze und dergleichen, zu verwenden. Die Übertragungsnetze können beispielsweise in Form von leitungsgebundenen Datennetzen, wie beispielsweise Internet, Telefonleitungen und dergleichen, oder als leitungslose Netze, wie beispielsweise Funkübertragungsnetze und dergleichen ausgebildet sein. Die Erfindung ist nicht die vorstehend beschriebenen Beispiele beschränkt. Vielmehr ist es für die Ausgestaltung des Übertragungsnetzes lediglich erforderlich, daß die im System erzeugten Signale, Daten, Werte, Informationen und dergleichen problemlos von den einzelnen Elementen des Systems zu anderen Elementen übertragen werden können.

Ein als Übertragungsnetz ausgebildetes Kommunikationsnetz kann auf verschiedene Weise ausgebildet sein. So ist es beispielsweise denkbar, daß es sich bei dem Kommunikationsnetz um das Internet oder um ein Leitungsnetzwerk handelt, über das die einzelnen Systemkomponenten miteinander verbunden sind. Hierbei kann sich beispielsweise um ein Netzwerk von Telefonleitungen, Datenleitungen und dergleichen handeln. Es sind auch Kombinationen verschiedener Kommunikationsnetzwerke denkbar.

Besonders vorteilhaft kann das Übertragungsnetz als Mobilfunknetz ausgebildet sein. Auf diese Weise kann bereits bei der Erfassung der Parameter über die Sensorelemente auf die bestehende, sehr gut ausgebaute Infrastruktur der Mobilfunknetze zurückgegriffen werden.

Vorteilhaft kann das wenigstens eine Sensorelement stationär und/oder mobil ausgebildet sein. Jedoch ist die Erfindung nicht auf bestimmte Ausgestaltungsformen für Sensorelemente beschränkt. Die technische Ausführung der Sensorelemente ergibt sich je nach den Anforderungen an die zu erfassenden Parameter des umweltbezogenen Rechts. Bei mobilen Sensorelementen handelt es sich vorteilhaft um stromnetzunabhängige Meßtechniken, mit denen im Zusammenhang mit der Regulierung von Emissionsrechten beispielsweise auch diffuse Emissionsquellen einbezogen werden können. Beispielsweise können die Sensorelemente eine Zurechnung zu bestimmten Orten haben. Ebenso ist es jedoch auch denkbar, daß eine solche Zurechnung zu bestimmten Orten nicht besteht.

Nachfolgend werden im Zusammenhang mit der Regulierung von Emissionsrechten einige nicht ausschließliche Beispiele für mögliche Ausgestaltungen von Sensorelementen beschrieben. So ist es beispielsweise denkbar, derartige Sensoren, etwa Ozonsensoren oder dergleichen, an Sendeanlagen eines Mobilfunknetzes anzubringen. Dies ist insbesondere in Ballungsräumen von Interesse. Ebenso ist es denkbar, entsprechende Sensorelemente, beispielsweise CO₂-, SO₂-Sensorelemente oder dergleichen an bestimmten Punktemissionsquellen anzubringen, bei denen es sich beispielsweise um Kraftwerke oder dergleichen handeln kann. Ähnliche Systeme sind auch für andere Emissionsquellen wie Wohngebäude und dergleichen anwendbar. Natürlich ist es auch möglich, Sensorelemente in mobilen Einrichtungen zu integrieren. Zu denken ist hier beispielsweise der Einsatz von Sensorelementen in Fahrzeugen zur Erfassung von diffusen Emissionsquellen, insbesondere zur Erfassung von CO₂. Alternativ könnten entsprechende Sensorelement auch zur Erfassung und zur Übermittlung von unterschiedlichsten Verbrauchsdaten eingesetzt werden, aus denen beispielsweise vom Brennstoffeinsatz abhängige Emissionsmengen errechnet werden können.

Vorteilhaft weist das wenigstens eine Sensorelement eine Einrichtung zum Erfassen der Parameterwerte und eine Einrichtung zum Übertragen der Parameterwerte auf. Darüber hinaus kann das Sensorelement auch eine Einrichtung zur Übertragung sensorspezifischer Informationen aufweisen.

Über die Einrichtung zum Erfassen der Parameterwerte wird zunächst der eigentliche Parameterwert in Form von Meßdaten erfaßt. Diese erfaßten Werte müssen anschließend an die Einrichtung zur Datenverarbeitung übertragen werden. Dies geschieht über die Einrichtung zum Übertragen der Parameterwerte. Weiterhin kann es sinnvoll sein, daß die Einrichtung zur Datenverarbeitung auch für das Sensorelement spezifische Informationen erhält. Auch hierfür kann das Sensorelement eine entsprechende Einrichtung aufweisen. Die einzelnen, zuvor beschriebenen Einrichtungen können dabei sowohl als separate Bestandteile des Sensorelements oder aber auch als ein einziger, integrierter Bestandteil des Sensorelements ausgebildet sein. Die jeweilige Ausgestaltung der Sensorelemente ergibt sich je nach der Art der zu erfassenden Parameter und/oder der Art des verwendeten Übertragungssystems.

Beispiele für unterschiedlichste Sensorelemente werden unter anderem in der EP-A-0 622 625 beschrieben, deren Offenbarungsgehalt insoweit in die Beschreibung der vorliegenden Erfindung miteinbezogen wird.

Je nach Ausgestaltung des Übertragungsnetzes kann die Einrichtung zum Übertragen der Parameterwerte, die Bestandteil eines Sensorelements ist, unterschiedlich ausgebildet sein. So ist es beispielsweise denkbar, daß die Übertragungseinrichtungen als Mobiltelefone ausgebildet sind. Ebenso ist es denkbar, daß die Übertragungseinrichtungen in Form von Rechnern ausgebildet sind. Bei den Rechnern kann es sich beispielsweise um stationäre Rechner, mobile Rechner und dergleichen handeln.

Vorzugsweise ist die Einrichtung zur Datenverarbeitung als wenigstens ein elektronischer Rechner ausgebildet. Natürlich kann auch mehr als ein elektronischer Rechner vorgesehen sein, wobei die elektronischen Rechner dann zumindest zeitweilig zu einem Rechnernetzwerk zusammengefaßt sind. In diesem Fall können sich die einzelnen Rechner an verschiedenen Stellen des Netzwerks befinden, wobei auch die einzelnen Komponenten der Einrichtung zur Datenverarbeitung auf verschiedene Rechner aufgeteilt sein können.

Vorteilhaft weist das System Mittel zur Durchführung des nachfolgend beschriebenen erfindungsgemäßen Verfahrens auf.

Bei den im Zusammenhang mit dem erfindungsgemäßen System vorstehend beschriebenen Mitteln und Einrichtungen kann es sich beispielsweise um Bestandteile der Einrichtung zur Datenverarbeitung beziehungsweise des wenigstens einen elektronischen Rechners, um elektronische Bauteile, Komponenten, Schaltungen, Schaltungsteile, um geeignete Programmittel, beziehungsweise Software, und dergleichen handeln.

Weiterhin kann die Einrichtung zur Datenverarbeitung als Server ausgebildet sein, in dem alle Einzelkomponenten der Einrichtung zur Datenverarbeitung, das heißt alle wie vorstehend beschriebenen Mittel und Einrichtungen integriert sind. Es ist jedoch auch denkbar, daß einzelne Komponenten der Einrichtung zur Datenverarbeitung separat ausgebildet sind, so daß diese zentral vorgehalten werden können. In diesem Fall können beispielsweise erfindungsgemäße Komponenten des Systeme vorgesehen sein, die alle auf eine zentrale Komponente zugreifen. In der zentralen Komponente können dann beispielsweise Basisdaten abgelegt sein.

Vorzugsweise kann die Einrichtung zur Datenverarbeitung Programmittel zur Durchführung des wie nachfolgend beschriebenen erfindungsgemäßen Verfahrens aufweisen. Die Programmittel können beispielsweise in Form von Computerprogrammen, beziehungsweise von Software, vorliegen, durch die der Betrieb der Einrichtung zur Datenverarbeitung und der Ablauf des Verfahrens gesteuert wird. Dadurch wird auf einfache Weise eine automatische Regulierung wenigstens eines umweltbezogenen Rechts von wenigstens einem Nutzer ermöglicht, deren besondere Vorteile weiter oben bereits beschrieben wurden.

Gemäß dem zweiten Aspekt der Erfindung wird ein Verfahren zum Regulieren umweltbezogener Rechte von Nutzern eines Systems zum Regulieren umweltbezogener Rechte, insbesondere zum Regulieren umweltbezogener Rechte in Form von Emissionsrechten und/oder Immissionsrechten, bereitgestellt, bei dem wenigstens einem Nutzer wenigstens ein umweltbezogenes Recht mit zumindest definiertem Ausgangswert zugeordnet wird, und bei dem zumindest ein für das umweltbezogene Recht spezifischer Parameter von wenigstens einem Sensorelement erfaßt und über ein Übertragungsnetz an eine Einrichtung zur Datenverarbeitung übertragen wird. Das Verfahren ist erfindungsgemäß dadurch gekennzeichnet, daß der wenigstens eine erfaßte und übertragene Parameterwert und/oder daraus erzeugte Parameterdaten über die Einrichtung zur Datenverarbeitung zur Erzeugung von Konto-Istwerten automatisch in wenigstens einer dem umweltbezogenen Recht zugeordneten digitalen Kontodatei abgelegt werden, daß der Konto-Istwert automatisch mit wenigstens einem vorgegebenen, auf den Wert des Rechts bezogenen Sollwert verglichen wird und daß das umweltbezogene Recht reguliert wird, sobald der Konto-Istwert den vorgegebenen Sollwert erreicht.

Das Verfahren kann vorzugsweise mittels geeigneter Programmittel ablaufen. Diese können beispielsweise in Form von Computerprogrammen, beziehungsweise Software, vorliegen.

Vorzugsweise kann das Verfahren zum Regulieren umweltbezogener Rechte eines Nutzers eines wie vorstehend beschriebenen erfindungsgemäßen Systems zum Regulieren umweltbezogener Rechte verwendet werden.

Vorteilhaft kann das Verfahren zum Regulieren umweltbezogener Rechter in Form von Emissionsrechten und/oder Immissionsrechten verwendet werden.

In weiterer Ausgestaltung kann die wenigstens eine digitale Kontodatei und/oder der wenigstens eine Sollwert und/oder der Wert des wenigstens einen umweltbezogenen Rechts und/oder Informationen den wenigstens einen Nutzer betreffend zumindest zeitweilig in wenigstens einer Speichereinrichtung abgespeichert werden.

Vorzugsweise können die Parameterwerte und/oder die daraus erzeugten Parameterdaten über die Einrichtung zur Datenverarbeitung automatisch in der digitalen Kontodatei aufsummiert werden. Dabei können die Konto-Istwerte aus den aufsummierten Parameterwerten und/oder Parameterdaten erzeugt werden.

Vorteilhaft kann das wenigstens eine umweltbezogene Recht reguliert werden, indem Rechte des wenigstens einen Nutzers automatisch auf eine andere Zeitperiode übertragen werden.

In weiterer Ausgestaltung können zwei oder mehr Nutzer des Systems vorhanden sein, wobei wenigstens ein umweltbezogenes Recht wenigstens eines Nutzers reguliert wird, indem Rechte von einem Nutzer automatisch auf wenigstens einen anderen Nutzer übertragen werden.

Vorteilhaft kann von der Einrichtung zur Datenverarbeitung automatisch eine Benachrichtigung des Nutzers generiert werden, mindestens sobald der Kontolstwert den vorgegebenen Sollwert erreicht.

Vorzugsweise kann die von der Einrichtung zur Datenverarbeitung generierte Benachrichtigung automatisch an den Nutzer übertragen werden.

In weiterer Ausgestaltung können zur Regulierung des umweltbezogenen Rechts, insbesondere auf die Benachrichtigung des Nutzers bezogene, vom Nutzer erzeugte Eingangsinformationen von der Einrichtung zur Datenverarbeitung erfaßt und weiterverarbeitet werden.

Vorteilhaft können die zur Übertragung von Rechten erforderlichen Informationsflüsse und/oder Zahlungsflüsse zwischen den Nutzern automatisch von einer Steuereinrichtung, die insbesondere Bestandteil der Einrichtung zur Datenverarbeitung ist, gesteuert werden.

In weiterer Ausgestaltung kann die Einrichtung zur Datenverarbeitung zur Übertragung der Rechte von einem Nutzer auf einen anderen Nutzer automatisch auf ein digitales Verzeichnis mit Übertragungsabsichten einzelner Nutzer zugreifen, wobei insbesondere Informationen bezüglich Übertragungsinteressenten automatisch in die Benachrichtigung des Nutzers integriert werden.

Vorteilhaft kann der Sollwert des wenigstens einen umweltbezogenen Rechts und/oder der Wert des wenigstens einen umweltbezogenen Rechts nach der Regulierung des wenigstens einen umweltbezogenen Rechts über die Einrichtung zur Datenverarbeitung automatisch an den regulierten Wert angepaßt werden.

Vorzugsweise können über die Einrichtung zur Datenverarbeitung die Regulierung des wenigstens einen umweltbezogenen Rechts betreffende Informationen generiert sowie bereitgestellt und/oder angezeigt werden.

Der wenigstens eine vom wenigstens einen Sensorelement erfaßte Parameter kann beispielsweise über ein Informationsübertragungsnetz, insbesondere über ein Kommunikationsnetz zur Einrichtung zur Datenverarbeitung übertragen werden. Dabei kann die Übertragung besonders vorteilhaft mittels eines Mobilfunknetzes erfolgen.

Gemäß einem dritten Aspekt der Erfindung wird ein Computerprogrammprodukt bereitgestellt mit einem von einem Computer lesbaren Programmedium, das, wenn das Programm geladen ist, Programmittel zur Durchführung des wie vorstehend beschriebenen erfindungsgemäßen Verfahrens aufweist. Ein solches Computerprogrammprodukt kann beispielsweise von einer Speichereinrichtung, aus dem Internet oder dergleichen auf beziehungsweise in den Computer, beziehungsweise den elektronischen Rechner, geladen werden.

Eine geeignete Speichereinrichtung für ein entsprechendes Computerprogrammprodukt kann beispielsweise dadurch gekennzeichnet sein, daß die Verfahrensschritte des wie vorstehend beschriebenen erfindungsgemäßen Verfahrens in in der Speichereinrichtung gespeicherten Programmitteln integriert sind. Als Speichereinrichtung können zum Beispiel herkömmliche Speichermedien vorgesehen sein, die jedoch durch die Programmittel, beziehungsweise durch die Software, eine besondere Funktionalität verkörpern, durch die sie sich von den bekannten Speichermedien in der besonderen Weise der vorliegenden Erfindung unterschieden.

Die vorstehend beschriebene Erfindung kann insbesondere im Zusammenhang mit handelbaren Emissionsrechten eingesetzt werden. Dabei ist es unter anderem zunächst notwendig, daß die Gesamtmenge an erlaubten Emissionen pro Nutzer politisch oder auf andere Weise festgelegt wird. Weiterhin muß den einzelnen Emittenten eine mengenmäßige Begrenzung der Emissionen auferlegt werden. Anschließend ist die tatsächliche Emission zu kontrollieren. Weiterhin ist es mittels der Erfindung möglich, den Transfer von Emissionsrechten zwischen mindestens zwei Wirtschaftssubjekten (einschließlich Staaten) zu ermöglichen.

Das wie vorstehend beschriebene, erfindungsgemäße System, beziehungsweise das Verfahren, eröffnet unter anderem ein neues Geschäftsfeld für Betreiber von Kommunikationsnetzen aller Art, beispielsweise Betreiber von Mobilfunknetzen, Stromnetzen, Festnetzen und dergleichen, für Betreiber von Handelssystemen, beispielsweise Börsen, Finanzdienstleister und dergleichen.

Die mittels des erfindungsgemäßen Systems gewonnenen und weiter verarbeiteten Daten können ferner genutzt werden für interne Handelssysteme einzelner Unternehmen oder Konzerne, die Steigerung der wirtschaftlichen Effizienz von Emissionsminderungsmaßnahmen, die Identifizierung von emissionsrelevanten Parametern, beispielsweise im Verkehrsbereich, die Kontrolle der Erreichung rechtlich oder anders gesetzter Emissionsziele, die Verbreitung und Intensivierung des Wissens über emissionswirksame Verhaltensweisen und Verfahren und dergleichen.

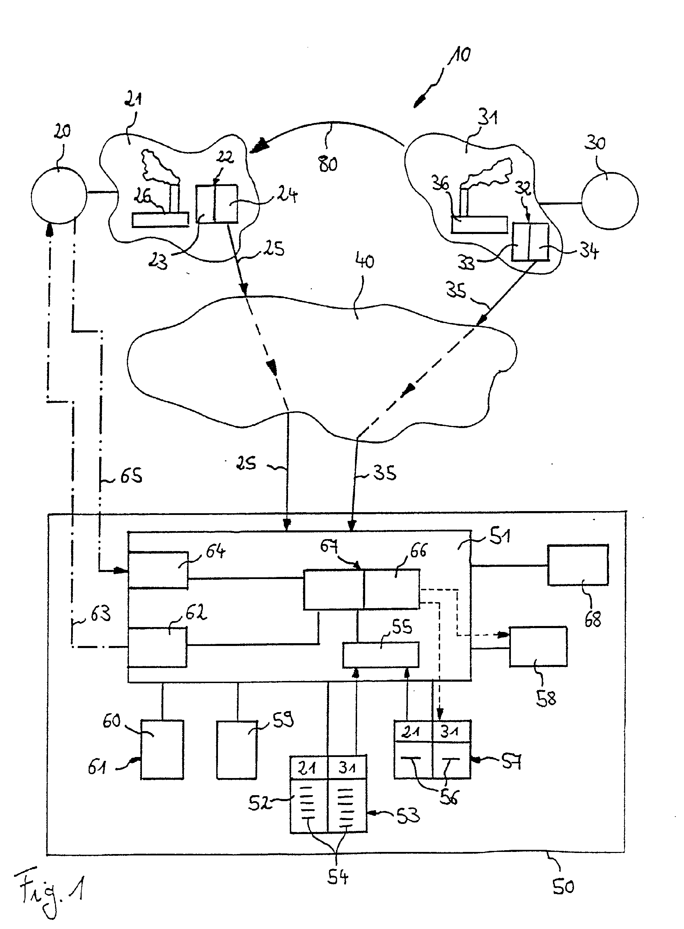

Die Erfindung wird nun an Hand von Ausführungsbeispielen unter Bezugnahme auf die beiliegende Zeichnung näher erläutert. Dabei zeigt die einzige Figur 1 in schematischer Ansicht ein erfindungsgemäßes System zum Regulieren umweltbezogener Rechte wenigstens eines Nutzers des Systems.

In der Figur 1 ist ein System 10 zum Regulieren umweltbezogener Rechte von Nutzern des Systems dargestellt. In der Figur sind der besseren Übersicht halber zwei Nutzer 20, 30 dargestellt, denen jeweils ein umweltbezogenes Recht 21, 31 mit zumindest definiertem Ausgangswert zugeordnet ist. Selbstverständlich können wesentlich mehr Nutzer des Systems vorhanden sein. Weiterhin kann jedem Nutzer auch mehr als ein umweltbezogenes Recht zugeordnet sein.

Im vorliegenden Ausführungsbeispiel soll das System 10 zum Regulieren umweltbezogener Rechte in Form von Emissionsrechten eingesetzt werden. Jeder der Nutzer 20, 30 verfügt über eine Emissionsquelle 26, 36, über die bestimmte Mengen an Stoffen, beispielsweise Kohlendioxid, in die Umgebung emittiert wird. Der Wert der Emissionsrechte 21, 31 bestimmt dabei die maximale Menge an emittierten Stoffen, die von den Emissionsquellen 26, 36 emittiert werden dürfen.

Die emittierten Stoffe der Emissionsquellen 26, 36 werden über Sensorelemente 22, 32 erfaßt. Die Sensorelemente 22, 32 verfügen zunächst über eine Einrichtung 23, 33 zum Erfassen von Parametern, beispielsweise zum Erfassen von Kohlendioxidwerten. Weiterhin weisen die Sensorelement 22, 32 eine Einrichtung 24, 34 zum Übertragen der gemessenen Parameter an eine Einrichtung 50 zur Datenverarbeitung auf. Dazu werden die von den Sensorelementen 22, 32 gemessenen Parameterwerte 25, 35 über ein Übertragungsnetz 40, das im vorliegenden Beispiel als Mobilfunknetz ausgebildet ist, auf die Einrichtung zur Datenverarbeitung 50 übertragen.

Da das Übertragungsnetz 40 als Mobilfunknetz ausgebildet ist, sind die Einrichtungen 24, 34 zum Übertragen der Parameter als Mobiltelefone ausgebildet.

Die Einrichtung 50 zur Datenverarbeitung weist zunächst einen elektronischen Rechner 51 auf, der wiederum über eine Anzahl von Einzelkomponenten verfügt. Mit dem elektronischen Rechner 51 verbunden sind in einer Speichereinrichtung 53 abgespeicherte digitale Kontodateien 52. Für jedes umweltbezogene Recht 21, 31 ist eine eigene digitale Kontodatei 52 vorgesehen. Die digitalen Kontodateien 52 beinhalten Konto-Istwerte 54 bezüglich der umweltbezogenen Rechte 21, 31. Die auf die Einrichtung 51 zur Datenverarbeitung übertragenen Parameterwerte 25, 35 werden vom elektronischen Rechner 51 derart verarbeitet, daß sie automatisch in den jeweiligen Kontodateien 52 abgelegt werden. Dabei werden die erfaßten Parameterwerte 25, 35 derart in Konto-Istwerte 54 umgewandelt, daß die jeweils erfaßten Werte zu den bereits in den Kontodateien 52 vorhandenen Werten aufsummiert werden, so daß immer ein aktueller Konto-Istwert für jedes umweltbezogene Recht 21, 31 vorhanden ist, der wiedergibt, wie viele Stoffe aus den Emissionsquellen 26, 36 aktuell emittiert worden sind.

Weiterhin weist die Einrichtung 50 zur Datenverarbeitung eine Speichereinrichtung 57 auf, in der entsprechende Sollwerte 56 für die umweltbezogenen Rechte 21, 31 abgespeichert sind. Die Sollwerte 56 geben an, welche Mengen welcher Stoffe von den Emissionsquellen 26, 36 emittiert werden dürfen. Im vorliegenden Beispiel liegen die Sollwerte 56 unter den tatsächlichen Werten der umweltbezogenen Rechte 21, 31, so daß zwischen den Sollwerten 56 und den tatsächlichen Werten der umweltbezogenen Rechte 21, 31 eine Differenz besteht.

Über die Einrichtung 50 zur Datenverarbeitung werden die Sollwerte 56 und die jeweiligen Istwerte 54 mittels einer Soll-Ist-Analyse nunmehr verglichen. Dazu weist die Einrichtung 50 zur Datenverarbeitung entsprechende Mittel 55 zum Soll-Ist-Vergleich auf, bei denen es sich im vorliegenden Beispiel um Bestandteile des elektronischen Rechners 51 handelt. Die Mittel 55 zum Soll-Ist-Vergleich lesen aus den Speichereinrichtungen 53 und 57 die für die umweltbezogenen Rechte 21, 31 relevanten Konto-Istwerte 54 sowie Sollwerte 56 aus, was durch entsprechende Pfeile dargestellt ist. In den Mitteln 55 zum Soli-Ist-Vergleich werden die beiden Werte nunmehr verglichen.

Darüber hinaus weist die Einrichtung 50 zur Datenverarbeitung eine Speichereinrichtung 59 auf, in der Informationen über die jeweiligen Nutzer 20, 30 abgespeichert sind. Weiterhin ist ein digitales Verzeichnis 60 für Übertragungsabsichten vorgesehen, welches in einer entsprechenden Speichereinrichtung 61 abgespeichert ist.

Wenn nun die Konto-Istwerte 54 die Sollwerte 56 erreichen, wird von der Einrichtung 50 zur Datenverarbeitung die Regulierung der entsprechenden umweltbezogenen Rechte in die Wege geleitet. Dazu sind in dem elektronischen Rechner 51 entsprechende Mittel 67 zum Regulieren der umweltbezogenen Rechte vorgesehen.

Im vorliegenden Ausführungsbeispiel soll angenommen werden, daß der Nutzer 20 über seine Emissionsquelle 26 mehr Stoffe emittiert als ihm durch sein Emissionsrecht 21 zustehen. Das bedeutet, daß der Nutzer 20 die für ihn festgelegte Höchstgrenze an Emissionen überschreiten wird. Für ihn besteht daher das Bedürfnis, den Wert seines Emissionsrechts 21 zu erhöhen, so daß er auch bei erhöhter Emissionstätigkeit die erlaubte Emissionsgrenze nicht überschreitet. Dies kann er beispielsweise dadurch erreichen, daß er Emissionsrechte von einem anderen Nutzer, im vorliegenden Fall vom Nutzer 30, übertragen bekommt.

Wenn nun die Konto-Istwerte 54 zum umweltbezogenen Recht 21 die entsprechenden Sollwerte 56 erreichen, wird von der Einrichtung 50 automatisch eine Benachrichtigung an den Nutzer 20 generiert. Dies erfolgt über Mittel 62 zum Generieren einer Benachrichtigung, die im vorliegenden Beispiel Bestandteil des elektronischen Rechners 51 sind. Diese Mittel 62 erzeugen eine Benachrichtigung 63, die anschließend an den Nutzer 20, vorzugsweise automatisch, weitergeleitet wird. Dem Nutzer 20 wird nunmehr bekannt, daß der Emissionssollwert 56 erreicht ist oder in Kürze erreicht wird. Gleichzeitig kann dem Nutzer 20 über die Mittel 62 zum Generieren einer Benachrichtigung mitgeteilt werden, daß der Nutzer 30 bereit ist, einen Teil seines Emissionsrechts 31 zu übertragen.

Beispielsweise kann der Nutzer 30 eine solch verminderte Emissionstätigkeit aufweisen, daß er den ihm zustehenden Höchstwert eines Emissionsrechts 31 nicht erreichen wird. In diesem Fall kann der Nutzer 30 eine entsprechende Nachricht an die Einrichtung zur Datenverarbeitung 50 schicken, daß er in einem bestimmten Umfang bereit ist, Emissionsrechte abzutreten. Diese Nachricht kann in Form einer Eingangsinformation an Mittel 64 zur Verarbeitung von Eingangsinformationen gerichtet werden, die Bestandteil des elektronischen Rechners 51 sind, und in denen die Eingangsinformation des Nutzers 30 automatisch weiterverarbeitet wird. Die Weiterverarbeitung kann im vorliegenden Beispiel derart gestaltet sein, daß entsprechende Informationen im digitalen Verzeichnis 60 über Übertragungsabsichten abgespeichert werden.

Wenn nun die Benachrichtigung 63 an den Nutzer 20 geschickt wird, wird der Benachrichtigung 63 über die Mittel 62 zum Generieren einer Benachrichtigung automatisch eine Information hinzugefügt, daß der Nutzer 30 an der Übertragung von Emissionsrechten interessiert ist. Dazu greifen die Mittel 62 auf das digitale Verzeichnis 60 zu und entnehmen diesem automatisch die entsprechenden Informationen.

Auf der Basis der übermittelten Benachrichtigung 63, die beispielsweise in elektronischer Form, etwa mittels Email oder dergleichen, erfolgen kann, kann nun der Nutzer 20 eine entsprechende Eingangsinformation 65 erzeugen und diese an die Einrichtung zur Datenverarbeitung 50, und hier insbesondere an die Mittel 64 zum Verarbeiten von Eingangsinformationen übertragen. Dazu kann der Nutzer 20 beispielsweise mittels einer ihm zugeordneten geeigneten Einrichtung zur Datenverarbeitung (nicht dargestellt) entsprechende Informationen in Form von Daten erzeugen und diese insbesondere elektronisch, etwa mittels Email oder dergleichen, an die Mittel 64 zum Verarbeiten von Eingangsinformationen übersenden.

Sowohl die Mittel 64 zum Verarbeiten von Eingangsinformationen, als auch die Mittel 62 zum Generieren einer Benachrichtigung kommunizieren intern mit den Mitteln 67 zum Regulieren des Rechts. Auf Grund der eingehenden Eingangsinformation 65 werden nun innerhalb der Mittel 67 zum Regulieren des Rechts automatisch alle erforderlichen Schritte zum Regulieren des Emissionsrechts 21 vorgenommen. Dies beinhaltet insbesondere auch die Durchführung aller für die Übertragung des Emissionsrechts 31 vom Nutzer 30 auf den Nutzer 20 erforderlichen Informationsflüsse und/oder Zahlungsflüsse. Nach Abschluß dieser Transaktionen geht der festgelegte Teil des Emissionsrechts 31 vom Nutzer 30 auf den Nutzer 20 über, was durch den Pfeil 80 dargestellt ist. Dadurch wird zum einen der Wert des Emissionsrechts 31 reduziert, während gleichzeitig der Wert des Emissionsrechts 21 vergrößert wird.

Um diese Wertänderung der Emissionsrechte 21, 31 festzuschreiben, sind in der Einrichtung 50 zur Datenverarbeitung entsprechende Mittel 66 zum Anpassen der Werte der Rechte vorgesehen. Diese Mittel 66 sind wiederum Bestandteil der Mittel 67 zum Regulieren von Rechten und damit Bestandteil des elektronischen Rechners 51. Über die Mittel 66 werden zum einen die in der Speichereinrichtung 57 abgelegten Sollwerte 56 der Emissionsrechte 21, 31 an die neuen Gegebenheiten angepaßt. Wenn die Einrichtung 50 zur Datenverarbeitung weiterhin über eine Speichereinrichtung 58 verfügt, in der die tatsächlichen Werte der Emissionsrechte 21, 31 abgespeichert sind, können über die Mittel 66 auch die in der Speichereinrichtung 58 abgelegten Werte der Emissionsrechte 21, 31 automatisch an die neue Ausgangssituation angepaßt werden. Die Anpassung der jeweiligen Werte ist durch entsprechende, gestrichelte Pfeile dargestellt.

Darüber hinaus verfügt die Einrichtung 50 zur Datenverarbeitung im vorliegenden Ausführungsbeispiel über Mittel 68 zum Bereitstellen und/oder Anzeigen von auf die Regulierung der Emissionsrechte 21, 31 bezogenen Informationen. Über diese Mittel können die entsprechenden Informationen den Nutzern 20, 30 oder aber auch anderen zur Überprüfung von Informationen autorisierten Personen, Institutionen und dergleichen, zu jeder Zeit zugänglich gemacht werden. Dies kann beispielsweise dadurch geschehen, daß die Informationen zentral abrufbar sind, beispielsweise mittels Internet oder dergleichen. Ebenso ist es möglich, daß die Informationen, quasi als digitaler Kontoauszug, über die Mittel 62 zum Generieren einer Benachrichtigung an die Nutzer 20, 30 beziehungsweise andere Personen übertragen werden.

Die Kommunikation zwischen dem Nutzer 30 beziehungsweise allen Nutzern des Systems 10 und der Einrichtung 50 zur Datenverarbeitung erfolgt auf gleiche Weise, wie dies im Zusammenhang mit dem Nutzer 20 in der Figur 1 dargestellt ist.

Mittels des erfindungsgemäßen Systems 10, beziehungsweise des darauf durchführbaren Verfahrens, wird es auf besonders einfache und kostengünstige Weise möglich umweltbezogene Rechte zwischen einzelnen Nutzern des Systems zu übertragen. Die Erfindung ist jedoch nicht auf die im Ausführungsbeispiel spezifizierte Konstellation beschränkt.

Im in Figur 1 dargestellten Ausführungsbeispiel wurde von der Situation ausgegangen, daß jedem der Nutzer 20, 30 ein auf eine punktuelle Emissionsquelle 26, 36 bezogenes Emissionsrecht 21, 31 zugeordnet ist. Es ist jedoch auch denkbar, daß jedem Nutzer mehr als ein Emissionsrecht beziehungsweise ein umweltbezogenes Recht zugeordnet ist. Ebenso ist es denkbar, daß pro umweltbezogenem Recht mehr als ein Parameter von den Sensorelementen erfaßt wird. Ferner ist denkbar, daß einem Nutzer mehrere Emissionsquellen zugeordnet sind, deren Emissionen einzeln oder summarisch erfaßt werden. Darüber hinaus ist es ebenso denkbar, daß zwar nur ein Parameter erfaßt wird, hierfür jedoch eine Reihe von Sensorelementen eingesetzt werden. Ein solches Beispiel wird nachfolgend im Zusammenhang mit im Verkehrsbereich auftretenden Emissionen kurz dargestellt.

Beispielsweise ist es denkbar, daß es sich bei den Nutzern des Systems um Autohersteller handelt, deren Emissionsrechte sich aus der Gesamtheit der von ihnen vertriebenen Fahrzeuge, beziehungsweise der von diesen Fahrzeugen emittierten Stoffe, wie beispielsweise Kohlendioxid, zusammensetzen. In diesem Fall ist dem Nutzer des Systems nicht eine punktuelle Emissionsquelle zugeordnet, vielmehr sind hier eine ganze Anzahl diffuser Emissionsquellen zu berücksichtigen. In einem solchen Fall kann beispielsweise in jedem Fahrzeug des Autoherstellers ein entsprechendes Sensorelement vorgesehen sein, das dann in der, wie im Zusammenhang mit dem Beispiel gemäß Figur 1 beschriebenen Weise, Emissionswerte erfaßt und an eine Einrichtung zur Datenübertragung übermittelt. In der Einrichtung zur Datenverarbeitung werden dann die einzelnen Emissionswerte eines jeden Fahrzeugs gesammelt und in der wie zuvor beschriebenen Weise in entsprechenden digitalen Kontodateien abgelegt. Die Regulierung der Emissionsrechte erfolgt dann in der wie weiter oben im Zusammenhang mit Figur 1 beschriebenen Art und Weise. Da es von jedem Fahrzeughersteller üblicherweise eine große Anzahl unterschiedlicher Fahrzeugtypen, Fahrzeuggenerationen und Fahrzeugspezifikationen gibt, kann der Fall auftreten, daß unterschiedliche Fahrzeuge ein und desselben Fahrzeugherstellers in bezug auf die emittierten Stoffe unterschiedlich bewertet werden. Beispielsweise können bestimmte Sondereinrichtungen, wie Katalysatoren und dergleichen, dazu führen, daß einzelne Fahrzeuge besser als andere Fahrzeuge bewertet werden. Um hier eine genaue, individuelle Bewertung der Emissionen zu ermöglichen, kann beispielsweise vorgesehen sein, daß für jeden Fahrzeugtyp eine eigene digitale Kontodatei in der Einrichtung zur Datenverarbeitung vorgesehen ist. Um eine fehlerfreie Zuordnung der einzelnen, von den Sensorelementen erfaßten Parameterwerte zu den entsprechenden Kontodateien zu ermöglichen, weisen die Sensorelement in einem solchen Fall vorzugsweise noch eine Einrichtung zur Übertragung sensorspezifischer Informationen auf. Diese sensorspezifischen Informationen können dann beispielsweise auch Detailinformationen zu dem jeweiligen Fahrzeugtyp enthalten, wodurch eine genaue, fehlerfreie Zuordnungsmöglichkeit zu den einzelnen digitalen Kontodateien geschaffen wird.

## Patentansprüche

1. System zum Regulieren umweltbezogener Rechte wenigstens eines Nutzers des Systems (10), insbesondere zum Regulieren umweltbezogener Rechte in Form von Emissionsrechten und/oder Immissionsrechten, wobei dem wenigstens einen Nutzer (20, 30) wenigstens ein umweltbezogenes Recht (21, 31) mit zumindest definiertem Ausgangswert zugeordnet ist, mit wenigstens einem Sensorelement (22, 32) zur Erfassung zumindest eines für das umweltbezogene Recht (21, 31) spezifischen Parameters, wobei das wenigstens eine Sensorelement (22, 32) über ein Übertragungsnetz (40) zumindest zeitweilig mit wenigstens einer Einrichtung zur Datenverarbeitung (50) verbunden oder verbindbar ist,
**dadurch gekennzeichnet,**
**daß** wenigstens eine dem umweltbezogenen Recht (21, 31) zugeordnete digitale Kontodatei (52) vorgesehen ist, in welcher über die Einrichtung zur Datenverarbeitung (50) vom Sensorelement (22, 32) erfaßte Parameterwerte (25, 35) und/oder daraus erzeugte Parameterdaten zur Erzeugung von Konto-Istwerten (54) automatisch abgelegt werden oder ablegbar sind,
**daß** Mittel (55) zum automatischen Vergleichen der Konto-Istwert (54) mit wenigstens einem vorgegebenen, auf den Wert des Rechts (21, 31) bezogenen Sollwert (56) vorgesehen sind, und
**daß** Mittel (67) zum Regulieren des umweltbezogenen Rechts (21, 31) vorgesehen sind, sobald der Konto-Istwert (54) den vorgegebenen Sollwert (56) erreicht.

2. System nach Anspruch, **dadurch gekennzeichnet, daß** wenigstens eine Speichereinrichtung (53; 57; 58; 59) zum zumindest zeitweiligen Abspeichern der wenigstens einen digitalen Kontodatei (52) und/oder zum Abspeichern des wenigstens einen Sollwerts (56) und/oder zum Abspeichern des Werts des wenigstens einen umweltbezogenen Rechts (21, 31) und/oder zum Abspeichern von Informationen über den wenigstens einen Nutzer (20, 30) vorgesehen ist.

3. System nach Anspruch 1 oder 2, **dadurch gekennzeichnet, daß** in der Einrichtung zur Datenverarbeitung (50) Mittel zum automatischen Aufsummieren der erfaßten Parameterwerte (25, 35) und/oder daraus erzeugter Parameterdaten und zum Erzeugen eines Konto-Istwerts (54) aus den aufsummierten Parameterwerten (25, 35) und/oder Parameterdaten vorgesehen sind.

4. System nach einem der Ansprüche 1 bis 3, **dadurch gekennzeichnet, daß** die Mittel (67) zum Regulieren des umweltbezogenen Rechts (21, 31) zur automatischen Übertragung von Rechten des Nutzers auf eine andere Zeitperiode ausgebildet sind.

5. System nach einem der Ansprüche 1 bis 4, **dadurch gekennzeichnet, daß** zwei oder mehr Nutzer (20, 30) des Systems (10) vorgesehen sind und daß die Mittel (67) zum Regulieren des umweltbezogenen Rechts (21, 31) zur automatischen Übertragung (80) von Rechten von einem Nutzer (30) auf wenigstens einen anderen Nutzer (20) ausgebildet sind.

6. System nach einem der Ansprüche 1 bis 5, **dadurch gekennzeichnet, daß** Mittel (62) zum automatischen Generieren einer Benachrichtigung (63) des Nutzers (20, 30) vorgesehen sind, mindestens sobald der Konto-Istwert (54) den vorgegebenen Sollwert (56) erreicht.

7. System nach einem der Ansprüche 1 bis 6, **dadurch gekennzeichnet, daß** die Einrichtung zur Datenverarbeitung (50) Mittel (64) zur Verarbeitung einer vom Nutzer (20, 30) an die Einrichtung zur Datenverarbeitung (50) gerichteten Eingangsinformation (65) aufweist.

8. System nach einem der Ansprüche 5 bis 7, **dadurch gekennzeichnet, daß** die Mittel (67) zum Regulieren des umweltbezogenen Rechts (21, 31) eine Steuereinrichtung zur automatischen Steuerung der mit der Übertragung der Rechte (21, 31) zwischen Nutzern (20, 30) verbundenen Informationsflüsse und/oder Zahlungsflüsse aufweisen.

9. System nach einem der Ansprüche 5 bis 8, **dadurch gekennzeichnet, daß** in diesem wenigstens ein digitales Verzeichnis (60) mit Übertragungsabsichten wenigstens eines Nutzers (20, 30) vorgesehen ist und daß das digitale Verzeichnis (60) insbesondere in einer Speichereinrichtung (61) abgespeichert ist.

10. System nach einem der Ansprüche 1 bis 9, **dadurch gekennzeichnet, daß** die Mittel (67) zum Regulieren des umweltbezogenen Rechts (21, 31) eine Einrichtung (66) zum automatischen Anpassen des Sollwerts (56) des wenigstens einen umweltbezogenen Rechts (21, 31) und/oder zum automatischen Anpassen des Werts des wenigstens einen umweltbezogenen Rechts (21, 31) aufweisen.

11. System nach einem der Ansprüche 1 bis 10, **dadurch gekennzeichnet, daß** das Sensorelement (22, 32) eine Einrichtung (23, 33) zum Erfassen der Parameterwerte (25, 35) und eine Einrichtung (24, 34) zum Übertragen der Parameterwerte (25, 35) aufweist.

12. Verfahren zum Regulieren umweltbezogener Rechte von Nutzern eines Systems zum Regulieren umweltbezogener Rechte, insbesondere zum Regulieren umweltbezogener Rechte in Form von Emissionsrechten und/oder Immissionsrechten, bei dem wenigstens einem Nutzer wenigstens ein umweltbezogenes Recht mit zumindest definiertem Ausgangswert zugeordnet wird und bei dem zumindest ein für das umweltbezogene Recht spezifischer Parameter von wenigstens einem Sensorelement erfaßt und über ein Übertragungsnetz an eine Einrichtung zur Datenverarbeitung übertragen wird,
**dadurch gekennzeichnet,**
**daß** der wenigstens eine erfaßte und übertragene Parameterwert und/oder daraus erzeugte Parameterdaten über die Einrichtung zur Datenverarbeitung zur Erzeugung von Konto-Istwerten automatisch in wenigstens einer dem umweltbezogenen Recht zugeordneten digitalen Kontodatei abgelegt werden, daß der Konto-Istwert automatisch mit wenigstens einem vorgegebenen, auf den Wert des Rechts bezogenen Sollwert verglichen wird und
**daß** das umweltbezogene Recht reguliert wird, sobald der Konto-Istwert den vorgegebenen Sollwert erreicht.

13. Verfahren nach Anspruch 12 zum Regulieren umweltbezogener Rechte eines Nutzers eines Systems zum Regulieren umweltbezogener Rechte nach einem der Ansprüche 1 bis 11.

14. Verfahren nach Anspruch 12 oder 13, **dadurch gekennzeichnet, daß** die wenigstens eine digitale Kontodatei und/oder der wenigstens eine Sollwert und/oder der Wert des wenigstens einen umweltbezogenen Rechts und/oder Informationen den wenigstens einen Nutzer betreffend zumindest zeitweilig in wenigstens einer Speichereinrichtung abgespeichert werden.

15. Verfahren nach einem der Ansprüche 12 bis 14, **dadurch gekennzeichnet, daß** die Parameterwerte und/oder die daraus erzeugten Parameterdaten über die Einrichtung zur Datenverarbeitung automatisch in der digitalen Kontodatei aufsummiert werden und daß die Konto-Istwerte aus den aufsummierten Parameterwerten und/oder Parameterdaten erzeugt werden.

16. Verfahren nach einem der Ansprüche 12 bis 15, **dadurch gekennzeichnet, daß** das wenigstens eine umweltbezogene Recht reguliert wird, indem Rechte des wenigstens einen Nutzers automatisch auf eine andere Zeitperiode übertragen werden.

17. Verfahren nach einem der Ansprüche 12 bis 16, **dadurch gekennzeichnet, daß** zwei oder mehr Nutzer des Systems vorhanden sind und daß wenigstens ein umweltbezogenes Recht wenigstens eines Nutzers reguliert wird, indem Rechte von einem Nutzer automatisch auf wenigstens einen anderen Nutzer übertragen werden.

18. Verfahren nach einem der Ansprüche 12 bis 17, **dadurch gekennzeichnet, daß** von der Einrichtung zur Datenverarbeitung automatisch eine Benachrichtigung des Nutzers generiert wird, mindestens sobald der Konto-Istwert den vorgegebenen Sollwert erreicht.

19. Verfahren nach einem der Ansprüche 12 bis 18, **dadurch gekennzeichnet, daß** zur Regulierung des umweltbezogenen Rechts, insbesondere auf die Benachrichtigung des Nutzers bezogene, vom Nutzer erzeugte Eingangsinformationen von der Einrichtung zur Datenverarbeitung erfaßt und weiterverarbeitet werden.

20. Verfahren nach einem der Ansprüche 17 bis 19, **dadurch gekennzeichnet, daß** die zur Übertragung von Rechten erforderlichen Informationsflüsse und/oder Zahlungsflüsse zwischen den Nutzern automatisch von einer Steuereinrichtung, die insbesondere Bestandteil der Einrichtung zur Datenverarbeitung ist, gesteuert werden.

21. Verfahren nach einem der Ansprüche 18 bis 20, **dadurch gekennzeichnet, daß** die Einrichtung zur Datenverarbeitung zur Übertragung der Rechte von einem Nutzer auf einen anderen Nutzer automatisch auf ein digitales Verzeichnis mit Übertragungsabsichten einzelner Nutzer zugreift und daß insbesondere Informationen bezüglich Übertragungsinteressenten automatisch in die Benachrichtigung des Nutzers integriert werden.

22. Verfahren nach einem der Ansprüche 12 bis 21, **dadurch gekennzeichnet, daß** der Sollwert des wenigstens einen umweltbezogenen Rechts und/oder der Wert des wenigstens einen umweltbezogenen Rechts nach der Regulierung des wenigstens einen umweltbezogenen Rechts über die Einrichtung zur Datenverarbeitung automatisch an den regulierten Wert angepaßt wird.

23. Computerprogrammprodukt, mit einem von einem Computer lesbaren Programmedium, das, wenn das Programm geladen ist, Programmittel zur Durchführung des Verfahrens nach einem der Ansprüche 12 bis 22 aufweist.
